# EUROPEAN PATENT SPECIFICATION

(11) **EP 2 713 478 B1**
(45) Date of publication and mention of the grant of the patent: **13.11.2019**
(21) Application number: 12186323.7
(22) Date of filing: 27.09.2012
(51) Int. Cl.: H02K 1/12, H02K 1/30, H02K 5/18, F03D 9/25, H02K 1/14, H02K 1/27, H02K 7/18

(54) **Outer structure of a generator**
Außenstruktur eines Generators
Structure externe de générateur

(43) Date of publication of application: 02.04.2014
(73) Proprietor: Siemens Gamesa Renewable Energy A/S, 7330 Brande (DK)
(72) Inventor: Kristensen, Torben Boye, 8600 Silkeborg (DK); Semmer, Silvio, 4051 Basel (CH); Sørensen, Thomas, 6640 Lunderskov (DK); Tehrani, Ashkan Vaziri, 8000 Århus (DK); Thaarup, Klaus, 2670 Greve (DK)
(74) Representative: Aspacher, Karl-Georg

(56) References cited:
- EP-A2- 1 777 795
- EP-A2- 2 136 453
- EP-A2- 2 456 048
- DE-A1- 19 636 591

## Description

The invention relates to an improved outer structure of a generator.

Generators convert mechanical energy into electrical energy.

Generators are often used as direct driven generators. In this case the rotational energy is fed directly to the generator, the rotation is not transferred by a gear.

This is often the case in wind power plants or in water power plants, where the rotor of the turbine is directly coupled to the generator. These direct driven generators are rotating slower compared to the generators in geared installations.

Depending on the power of the generator and the torque, these generators have a diameter of more then 4 meters and a length of more then 2 meters.

The size of the generator often leads to problems in transporting the generator. This can be due to the size and/or due to the weight of the generator.

Generators are built as electrical machines with an outer rotor or with an inner rotor.

At a machine with an outer rotor the stator is the inner part of the machine. The rotor is mounted rotatable around the stator.

At a machine with an inner rotor, the stator is the outer part of the electric machine. The rotor is mounted rotatable inside the stator.

The rotors of direct driven generators are often equipped with permanent magnets. The permanent magnets are installed in the rotor of the generator.

This outer rotor or the stator of an inner rotor machine builds the outer support structure.

It might be that there is a housing mounted to this outer support structure. The housing is then a separate enclosure mounted to the generator.

If there is no housing, the outer support structure of the generator is in direct contact with the ambient air.

Similar prior art is disclosed in EP 2456048 A2, EP 2136453 A2, EP 1777795 A2 and DE 19636591 A1.

The outer support structure of the generator is usually a single welded and machined steel component. This component usually has a cylindrical shape, which is at least partially closed at the flat axial sides.

This component is produced with a certain tolerance. This tolerance is very low. It is difficult to produce a steel part of this size with such a low tolerance. This leads to the problem, that there is just a limited amount of suppliers that are capable of producing such a steel part.

This steel part then has to be transported to the factory where the generator is assembled, and then to the site where it is going to be installed.

Also the total process time of this steel part is very high.

The aim of the invention is therefore to provide an outer support structure for a generator that is easier to manufacture and to transport.

This object is solved by a generator with the features of claim 1. Preferred embodiments are disclosed in the dependent claims.

A generator comprises a rotor and a stator, whereby the generator is a radial flux electrical machine. An outer part of the generator is the stator or the rotor, whereby the outer part of the generator comprises a support structure.

The support structure is modular and the modules are arranged in rows. The modules are arranged in a staggered manner, so that a module in a first row of modules is connected to two modules of a second row abutting on the first row.

The support structure builds the outer part of the generator. In the case of an outer rotor generator, the support structure is a part of the rotor of the generator. In the case of an inner rotor/outer stator generator, the support structure is a part of the stator or supporting the stator.

The outer part of the generator is the part with the biggest diameter. This part is the most difficult to manufacture and transport.

The outer part, here the support structure, is build by several modules. The modules are connected to each other to build the support structure. Thus the support structure, the outer part of the generator, is manufactured and transported in several pieces. Thus it is not necessary to manufacture and transport one work-piece with the diameter of the support structure.

Preferably most of the modules used to build a support structure are identical. Thus the support structure is assembled with several identical modules.

Thus the manufacturing and the assembling of the support structure is easier. The modules can be packed and transported in a normal standardized container and the support structure can be assembled at the site of the installation of the generator.

The modules are arranged in rows. The modules of a first row are arranged in a staggered manner in respect to the modules of a second row. So the modules of a first row are arranged in a shifted manner in respect to the modules of a neighboring row. Thus each module is connected to two modules in one neighboring row.

This staggered arrangement of the modules leads to an arrangement that equals the building bricks in a wall.

Every module is tightly connected to two modules in each of the neighboring rows. This arrangement of modules leads to a very rigid construction. The modules do not need to be connected to the neighboring module in the same row.

The rows can be arranged in a way that one row form a circumferential part of the support structure. A number of modules in a row form the round shape of the support structure. A number of rows form the height of the generator.

The rows can also be arranged in a way that a number of modules in one row define the height of the generator. A certain number of rows then build the circumferential cylinder of the support structure.

The manufacturing of modules is much easier than the manufacturing of the whole support structure in one piece. Thus no special heavy machinery is needed for the manufacturing of the modules.

Thus manufacturing time and manufacturing costs are saved. Also the number of suppliers able to manufacture modules is much higher then the number of suppliers that are capable to manufacture a support structure in one piece.

Thus the manufacturing of the modules can be done locally in the country of the installation site of the generator. Thus transportation costs are minimized.

The generator is an outer rotor electric machine, whereby the support structure is the rotor of the generator.

The generator is an outer rotor machine. The stator of the generator is arranged inside the rotor. The rotor is rotating around the stator. The rotor of the generator builds the outer structure of the generator.

The support structure builds the rotor of the generator. The modules are assembled together to form the rotor of the generator.

Thus the rotor can be build up by several identical modules. The modules are stiff and the connection of the modules is rigid. Thus the rotor is capable to provide a constant air gap in the generator.

Thus the rotor is produced as a number of modules and assembled at the site of the installation of the generator. Thus the transportation can be dome with a number of standardized containers. Thus the transportation is cheaper then with a rotor made of one large piece.

The rotor comprises a permanent magnet.

The generator is an electric machine using permanent magnets in the rotor. The rotor is equipped with permanent magnets. The permanent magnets are installed in the rotor.

Thus the rotor of the generator used permanent magnets for the generation of electricity. Thus the rotor is not equipped with coils. Thus the rotor does not need slip rings. Thus the construction of the rotor is simpler. Thus the rotor easily be build of several identical modules.

A module comprises fixation means for a permanent magnet.

The permanent magnets are mounted to the rotor of the generator. Thus the permanent magnets are mounted to the modules of the rotor. The modules of the rotor comprise fixation means to mount the permanent magnets to the modules.

Thus the permanent magnets can be mounted directly to the modules. Thus no additional mounting structure for permanent magnets is necessary.

Thus the permanent magnets can be mounted to the modules before the modules are connected together. Thus the assembly of the permanent magnets is easier. Thus no heavy machinery is necessary to install the permanent magnets. Thus installation time is saved.

The installation of the permanent magnets to the modules can be done before the modules arrive at the installation site of the generator.

Thus the installation of the permanent magnets can be done at a site with the machinery needed. Thus machinery does not need to be transported to the installation site.

A permanent magnet is slidable in one direction in the fixation means and fixed in the two other directions of three orthogonal directions.

The permanent magnet is held in a fixation means. The fixation means hinders the permanent magnet to be attracted to the stator of the generator. The fixation arrangement also hinders the permanent magnet to change its position along the circumference of the rotor.

The modules comprise a fixation means that holds the permanent magnet in its place in respect to two directions of three orthogonal directions.

Thus the permanent magnet can be slid in the fixation means along the third of the three orthogonal directions.

Thus the installation of the permanent magnets can be performed easily.

Preferably this can be achieved by a dove-tail connection.

Thus no additional fixation means need to be attached to the module after the installation of the permanent magnet. Thus no additional parts need to be attached to the module. Thus no parts can come loose during the operation of the generator. Thus the operational security of the generator is improved.

A module comprises insulated stacked lamination plates.

A insulated stack of lamination plates reduced the losses in the generator due to eddy current. Thus the loss of energy is reduced. Thus the amount of waste heat in the generator is reduced.

A module comprises a cooling rib on the outer side.

The outer side of the generator and therefore the outer side of the modules are in direct contact to the ambient air. Thus the outer surface of the modules can be used for cooling.

The outer side of a module comprises a rib. Thus the surface of the outer side of the module is enlarged. Thus the surface that is in contact with the ambient air is enlarged. Thus the cooling effect of the module is increased.

The modules comprise holes, so that two modules are prepared to be connected by bolts.

The modules are connected to neighboring modules of the abutting rows. A module is equipped with holes to fasten the modules together by bolts. The holes are arranged close to the upper and lower end of a module, so the ends where the module is abutting on the modules of the neighboring rows.

Thus the connection can be performed fast and easy. Thus the connection is rigid enough to withstand the gravitational and magnetic forces acting on the support structure of the generator.

The generator is the generator of a wind turbine.

Wind turbines are often installed in remote areas. The generator needs to be transported to the remote place. This can be by ship or by road transport. Wind turbines are often installed on mountains or in areas with a weak network of roads. The generator is often one of the parts that are difficult to transport.

The outer part of the generator can be transported as single modules and can be assembled to full size at, or close to, the erection site.

Thus the parts to be transported are lighter in weight and smaller. Thus the transport is easier. Thus transportation cost is saved. Thus transportation time is saved.

The wind turbine is a direct driven wind turbine.

The generators of direct driven wind turbines are several meters in diameter and are especially heavy. As the planned power of wind turbines is constantly growing, also the mass and the dimensions of the generators are increasing. Transportation sets boundaries to the maximum weight and maximum dimensions of the generators that need to be transported.

A modularized outer structure of the generator reduces the weight and the dimensions of the parts that need to be transported.

Thus more powerful generators can be planned, they can be produced and transported in parts and can be assembled on site. Thus the transportation of more powerful generators is possible.

Thus wind turbines can be panned to be more powerful. Thus the costs of energy can be reduced.

The invention is shown in more detail by the help of figures. The figures show a preferred configuration and do not limit the scope of the invention.
- FIG 1: shows a part of an outer support structure of a generator.
- FIG 2: shows another view of an outer structure of a generator.
- FIG 3: shows three parts of an outer support structure connected.
- FIG 4: shows another view of the three parts of the outer support structure.
- FIG 5: shows an assembly of parts to an outer support structure.
- Fig 6: shows an assembly of a part of an outer support structure.
- FIG 7: shows a permanent magnet arranged at a part of an outer rotor.

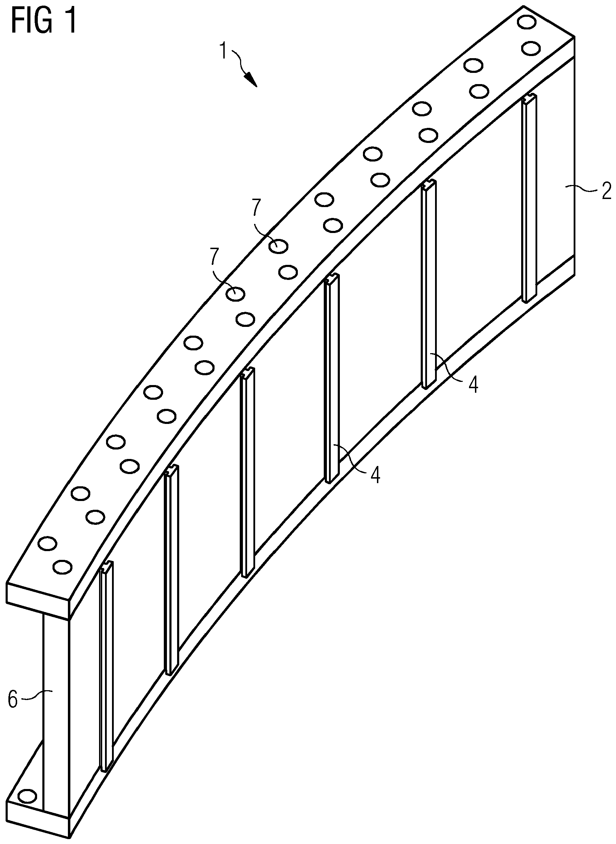

FIG 1 shows a part of an outer support structure of a generator.

FIG 1 shows a module 1 of a support structure of an outer rotor generator.

The module 1 is at the upper and lower end equipped with means for connecting the module 1 to a neighboring module. these means comprise holes that can be used for bolts for example.

The inner side 2 of the module 1 comprises fixation means 4 to support permanent magnets in the generator. The permanent magnets can be slid into the fixation means 4 from the upper or lower side of the module 1.

The module 1 comprises insulated stacked lamination plates 6. The plates 6 are formed in a way that the plates comprise the fixation means 4 for the permanent magnets.

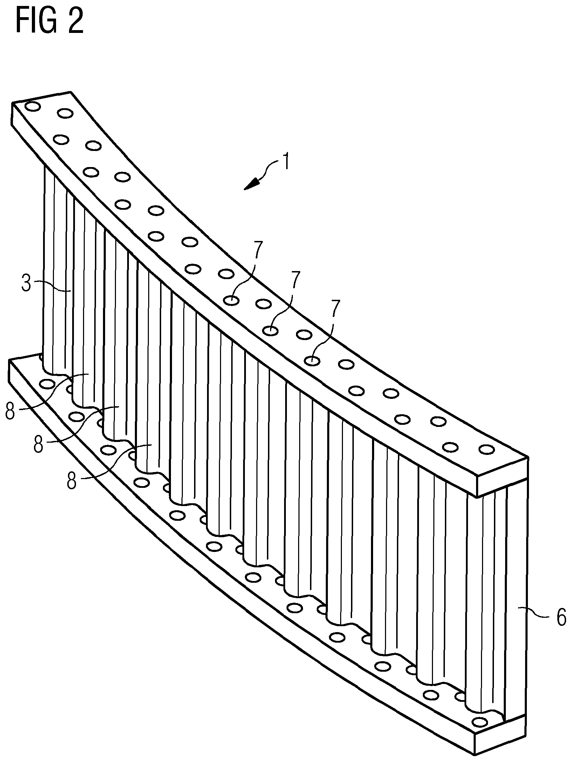

FIG 2 shows another view of an outer structure of a generator.

FIG 2 shows a view of a module 1 seen from the other side. The outer side 3 of the module 1 is visible. The module 1 comprises a rib 8 to increase the outer surface and to improve the cooling of the generator.

The bolts used to connect the modules 1 can be arranged through the holes 7 and can be tightened from the outer side of the generator.

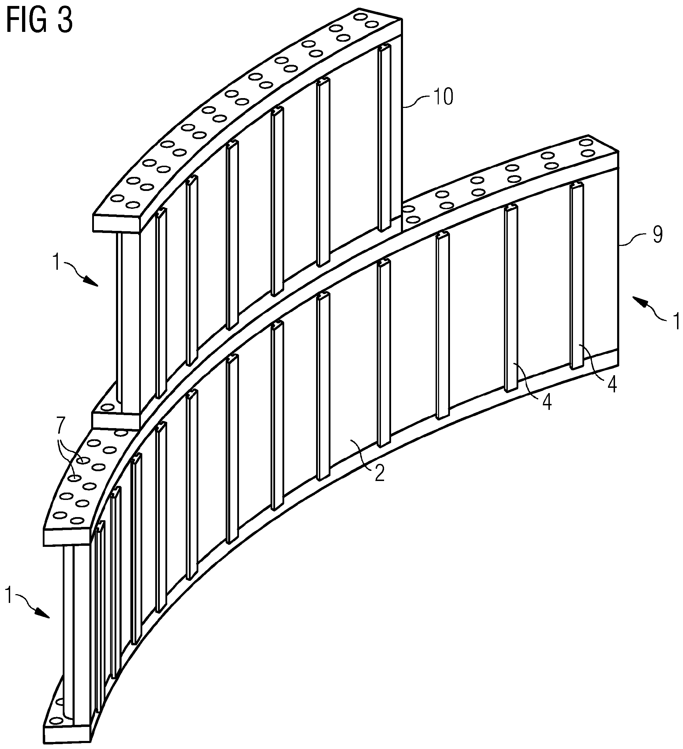

FIG 3 shows three parts of an outer support structure connected.

FIG 3 shows a part of a support structure of a generator. The part of the support structure comprises three modules 1.

The modules are arranges in a first row 9 and a second row 10. The two modules 1 of the first row 9 are connected the module 1 in the second row 10. The modules comprise means for connecting the modules. The means for connecting the modules are arranged at the upper and lower end of the modules.

A module 1 is not connected to its neighboring module in the same row. The module 1 in the second row 10 is arranged in a staggered manner in respect to the modules in the first row 9. So the module 1 in the second row is connected to two modules 1 in the first row 9.

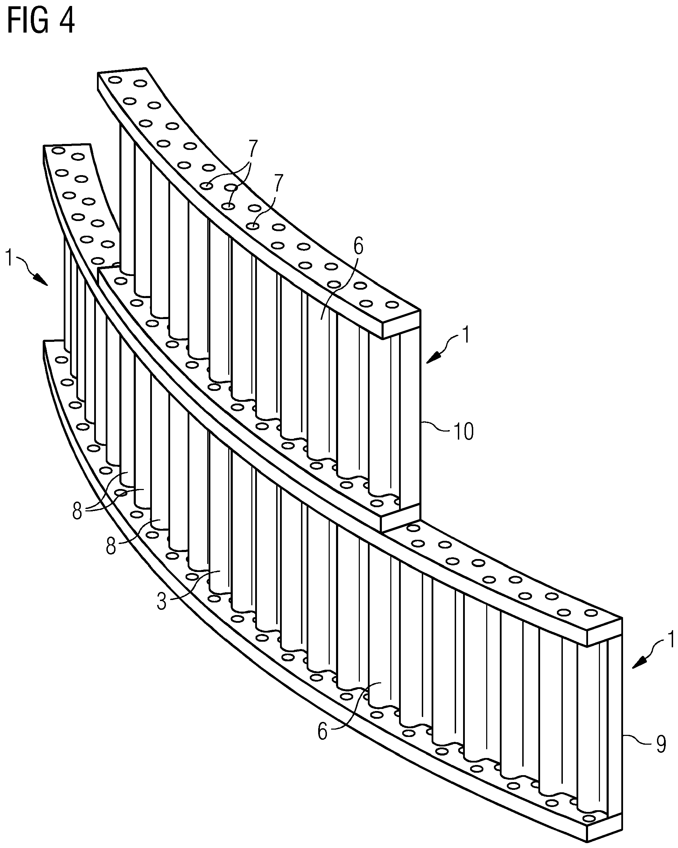

FIG 4 shows another view of the three parts of the outer support structure.

FIG 4 shows the three modules 1 of FIG 3 seen from the outer side. The module 1 of the second row 10 is arranged in a way that it can be connected to two modules 1 in the first row 9.

The modules 1 can be connected by bolts through the holes 7. The connection can be established from the outer side 3 of the support structure and so from outside of the generator.

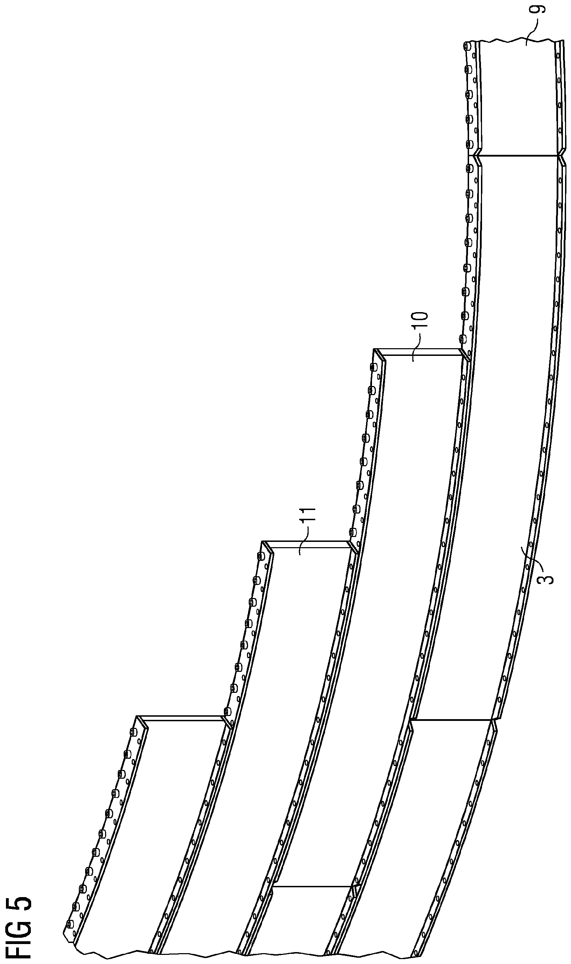

FIG 5 shows an assembly of parts to an outer support structure.

FIG 5 shows a part of an outer rotor of a generator comprising several modules 1. The modules 1 are arranged in rows 9, 10, 11. Each module 1 is connected to two neighboring modules 1 in another row. So every module 1 has two modules in one neighboring row, where it is connected to.

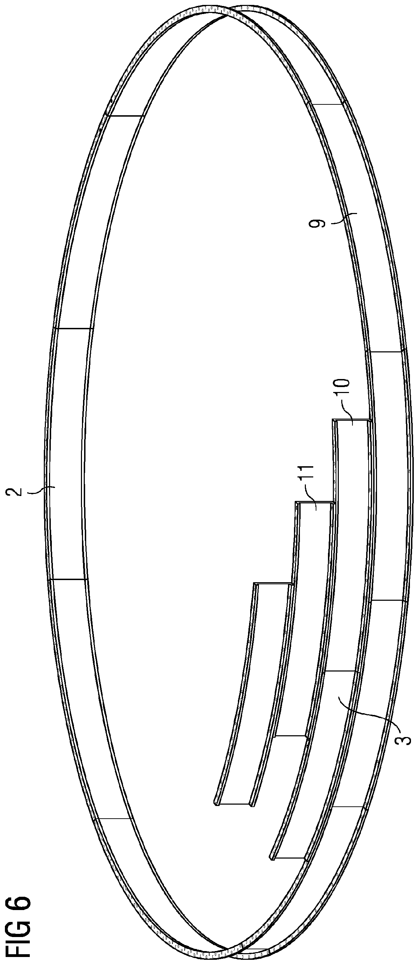

Fig 6 shows an assembly of a part of an outer support structure.

FIG 6 shows a part of a rotor of a generator. The first row 9 is already closed to a ring. On this ring 9 the other rows 10, 11 with modules 1 are arranged. After arranging a sufficient number of rows, a support structure is created, that builds the cylindrical rotor of the generator.

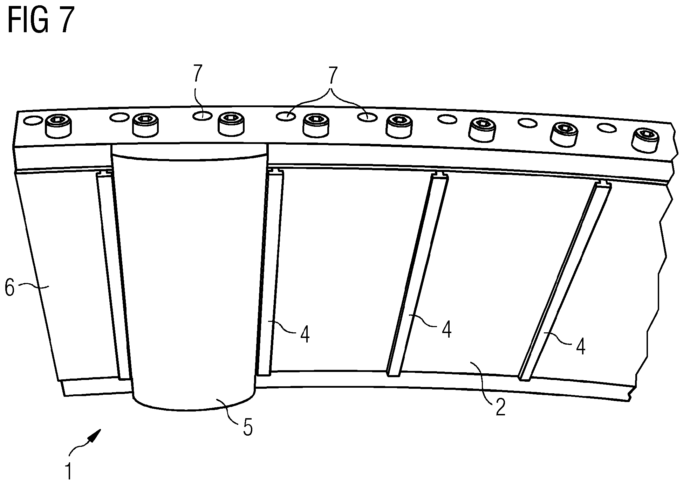

FIG 7 shows a permanent magnet arranged at an part of an outer rotor.

FIG 7 shows a module 1 and a permanent magnet 5. The permanent magnet 5 is arranged in the fixation means 4 to hold the permanent magnet 5.

The module 1 comprises insulated stacked lamination plates 6. The fixation means 4 are a part of the lamination plates 6. The form of the plates of the lamination is planned in a way, that the lamination plates 6 comprise the fixation means 4 after they are connected to build an insulated stack.

## Claims

1. Generator comprising a rotor and a stator,
- whereby the generator is an radial flux electrical machine,
- whereby an outer part of the generator is the stator or the rotor,
- whereby the outer part of the generator comprises a support structure,
- whereby the support structure is modular and the modules (1) are arranged in rows (9, 10, 11),
- whereby the modules (1) are arranged in a staggered manner, so that a module (1) in a first row (9) of modules (1) is connected to two modules (1) of a second row (10) abutting on the first row (9),
**characterized in that** the modules (1) comprise holes (7), so that two modules (1) are connected by bolts,
- whereby first holes of the module are arranged close to the upper end of the module, where the module is abutting on the modules of a first neighboring row, and second holes of the module are arranged close to the lower end of the module, where the module is abutting on the modules of a second neighboring row.

2. Generator according to claim 1, whereby the generator is an outer rotor electric machine, whereby the support structure is the rotor of the generator.

3. Generator according to one of the preceding claims, whereby the rotor comprises a permanent magnet (5).

4. Generator according to claim 3, whereby a module comprises fixation means (4) for a permanent magnet (5).

5. Generator according to claim 4, whereby a permanent magnet (5) is slidable in one direction in the fixation means (4) and fixed in the two other directions of three orthogonal directions.

6. Generator according one of the preceding claims, whereby a module (1) comprises insulated stacked lamination plates (6) .

7. Generator according to one of the preceding claims, whereby a module (1) comprises a cooling rib (8) on the outer side (3).

8. Generator according to one of the preceding claims, whereby the generator is the generator of a wind turbine.

9. Generator according to claim 8, whereby the wind turbine is a direct driven wind turbine.

## Patentansprüche

1. Generator umfassend einen Rotor und einen Stator,
- wobei der Generator eine elektrische Radialflussmaschine ist,
- wobei ein äußerer Teil des Generators der Stator oder der Rotor ist,
- wobei der äußere Teil des Generators eine Tragkonstruktion umfasst,
- wobei die Tragkonstruktion modular aufgebaut ist und die Module (1) in Reihen (9, 10, 11) angeordnet sind,
- wobei die Module (1) versetzt angeordnet sind, so dass ein Modul (1) in einer ersten Reihe (9) der Module (1) mit zwei Modulen (1) einer zweiten Reihe (10) verbunden ist, die an die erste Reihe (9) angrenzt,
**dadurch gekennzeichnet, dass**
die Module (1) Löcher (7) umfassen, so dass zwei Module (1) durch Bolzen verbunden werden,
- wobei erste Löcher des Moduls nahe dem oberen Ende des Moduls angeordnet sind, wobei das Modul an die Module einer ersten benachbarten Reihe angrenzt, und wobei zweite Löcher des Moduls nahe dem unteren Ende des Moduls angeordnet sind, wo das Modul an die Module einer zweiten benachbarten Reihe angrenzt.

2. Generator nach Anspruch 1, wobei der Generator eine elektrische Maschine mit Außenrotor ist, wobei die Tragkonstruktion der Rotor des Generators ist.

3. Generator nach einem der vorstehenden Ansprüche, wobei der Rotor einen Dauermagneten (5) umfasst.

4. Generator nach Anspruch 3, wobei ein Modul Befestigungsmittel (4) für einen Dauermagneten (5) umfasst.

5. Generator nach Anspruch 4, wobei ein Dauermagnet (5) in einer Richtung in den Befestigungsmitteln (4) verschiebbar ist und in den beiden anderen Richtungen der drei orthogonalen Richtungen fixiert ist.

6. Generator nach einem der vorstehenden Ansprüche, wobei ein Modul (1) isolierte gestapelte laminierte Bleche (6) umfasst.

7. Generator nach einem der vorstehenden Ansprüche, wobei ein Modul (1) auf der Außenseite (3) eine Kühlrippe (8) umfasst.

8. Generator nach einem der vorstehenden Ansprüche, wobei der Generator der Generator einer Windturbine ist.

9. Generator nach Anspruch 8, wobei die Windturbine eine direkt angetriebene Windturbine ist.

## Revendications

1. Générateur comprenant un rotor et un stator,
- dans lequel le générateur est une machine électrique à flux radial,
- dans lequel une partie extérieure du générateur est le stator ou le rotor,
- dans lequel la partie extérieure du générateur comprend une structure de support,
- dans lequel la structure de support est modulaire et les modules (1) sont agencés en rangées (9, 10, 11),
- dans lequel les modules (1) sont agencés de manière décalée, de sorte qu'un module (1) dans une première rangée (9) de modules (1) soit relié à deux modules (1) d'une deuxième rangée (10) venant en butée sur la première rangée (9),
**caractérisé en ce que**
les modules (1) comprennent des trous (7), de sorte que deux modules (1) soient reliés par des boulons,
- dans lequel des premiers trous du module sont agencés à proximité de l'extrémité supérieure du module, où le module vient en butée sur les modules d'une première rangée voisine, et des deuxièmes trous du module sont agencés à proximité de l'extrémité inférieure du module, où le module vient en butée sur les modules d'une deuxième rangée voisine.

2. Générateur selon la revendication 1, dans lequel le générateur est une machine électrique à rotor extérieur, dans lequel la structure de support est le rotor du générateur.

3. Générateur selon l'une des revendications précédentes, dans lequel le rotor comprend un aimant permanent (5).

4. Générateur selon la revendication 3, dans lequel un module comprend un moyen de fixation (4) pour un aimant permanent (5).

5. Générateur selon la revendication 4, dans lequel un aimant permanent (5) peut coulisser dans une direction dans le moyen de fixation (4) et est fixé dans les deux autres directions de trois directions orthogonales.

6. Générateur selon l'une des revendications précédentes, dans lequel un module (1) comprend des plaques de stratification empilées isolées (6).

7. Générateur selon l'une des revendications précédentes, dans lequel un module (1) comprend une nervure de refroidissement (8) sur le côté extérieur (3).

8. Générateur selon l'une des revendications précédentes, dans lequel le générateur est le générateur d'une éolienne.

9. Générateur selon la revendication 8, dans lequel l'éolienne est une éolienne à entraînement direct.
